(19) Europäisches Patentamt
European Patent Office
Office européen des brevets

(11) Publication number: **0 018 015**
**A1**

(12) # EUROPEAN PATENT APPLICATION

(21) Application number: **80102157.7**

(22) Date of filing: **22.04.80**

(51) Int. Cl.³: **C 08 L 23/12**, C 08 L 67/02, C 08 K 3/34, C 08 K 5/36

(30) Priority: **23.04.79 US 32315**

(43) Date of publication of application: **29.10.80 Bulletin 80/22**

(84) Designated Contracting States: **DE FR GB IT**

(71) Applicant: **EASTMAN KODAK COMPANY, 343 State Street, Rochester, New York 14650 (US)**

(72) Inventor: **Pruett, Wayne Payton, P.O. Box 511, Kingsport Tennessee (US)**
Inventor: **Zannucci, Joseph Salvatore, P.O. Box 511, Kingsport Tennessee (US)**

(74) Representative: **Brandes, Dipl.Chem. Dr. et al, Thierschstrasse 8, D-8000 München 22 (DE)**

(54) **Stabilized polyolefins filled with talc.**

(57) The resistance to oxidative degradation of polyolefin compositions containing 5 to 50 % by weight of talc and a phenolic antioxidant is improved by adding to the composition a stabilizing amount of poly TDP which is a polyester having an average molecular weight of from about 500 to about 4,000, and having the repeating unit

$$-O-\overset{O}{\overset{\|}{C}}-(CH_2)_2-S-(CH_2)_2-\overset{O}{\overset{\|}{C}}-O-R-$$

wherein R is selected from divalent radicals such as 1,1-cyclohexanedimethylene; 1,2-cyclohexanedimethylene; 1,3-cyclohexanedimethylene; and 1,4-cyclohexanedimethylene; and preferably being at least partially chain-terminated with a compound such as methanol, ethanol and butanol or acids or their anhydrides such as acetic, butyric and isobutyric acid.

EP 0 018 015 A1

# STABILIZED POLYOLEFINS FILLED WITH TALC

This invention relates to stabilized polyolefin compositions filled with talc having improved resistance to oxidative degradation, especially at elevated temperatures.

Polyolefin compositions which are crystalline have found wide acceptance as moldable plastics and include low, medium and high density polyethylene, polypropylene and ethylene/propylene crystalline copolymers containing up to about ten percent ethylene have been used to prepare many types of molded articles. These molded articles are generally unstable however when exposed to oxygen, particularly when exposed to oxygen in the presence of heat. This instability causes degradation of the polymer with a loss of physical properties of the molded article.

Phenolic antioxidants have been added to the polyolefins to improve their oxidative stability or resistance to oxidative degradation. However, when the polyolefin compositions contain from 5 to 50% by weight of talc as a filler, the phenolic antioxidants do not provide adequate oxidative stability to the polyolefin compositions.

In accordance with this invention the resistance to oxidative degradation of polyolefin compositions, particularly polypropylene compositions, containing 5 to 50% by weight talc and a phenolic antioxidant is improved by adding to the composition poly TDP which is a polyester having the repeating unit

$$-O-\overset{\overset{O}{\|}}{C}-(CH_2)_2-S-(CH_2)_2-\overset{\overset{O}{\|}}{C}-O-R-$$

wherein R is selected from the group of divalent radicals consisting of 1,1-cyclohexanedimethylene; 1,2-cyclohexanedimethylene; 1,3-cyclohexanedimethylene; and 1,4-cyclohexanedimethylene; said polyester being at least

partially chain-terminated with an alcohol selected from methanol; ethanol; butanol; isobutanol; 2-ethylhexanol; 2,2-dimethylpentanol; 2,2,4-trimethylpentanol; and stearyl alcohol; or an acid or anhydride selected from acetic, butyric, isobutyric, lauric, oleic, stearic, pelargonic and benzoic; and said polyester having an average molecular weight of from about 500 to about 4000. The results obtained with these particular stabilizer combinations were unobvious and unexpected since each of these stabilizers when used alone in polyolefin filled with talc is not an effective oxidation stabilizer.

The poly TDP possesses an unusual ability to protect polyolefin compositions filled with talc against deterioration due to oxygen and heat, and the protection is retained after severe aging, such as at 150°C. for several months.

The preferred poly TDP is a polyester prepared from dimethyl-3,3'-thiodipropionate, a diol such as 1,4-cyclohexane dimethanol, and preferably capped with an alcohol such as stearyl alcohol or with acetic acid. The poly TDP can vary in average molecular weight from 500 to 4000, preferably from 1500 to 2500. This polyester is more fully described in U.S. Patents 3,590,056 and 3,466,323.

A preferred group of phenolic antioxidants useful herein include 2,2'-methylene bis(4-methyl-6-tert-butylphenol), 2,6-bis(2'-hydroxy-3'-tert-butyl-5'-methylbenzyl)-4-methylphenol, 2,2'-thiobis(4-methyl-6-tert-butylphenol), 2,6-di-tert-butyl-4-methylphenol, 4,4'-methylene bis(2,5-di-tert-butylphenol), 4,4'-bis(2,6-di-tert-butylphenol), n-octadecyl 3,5-di-tert-butyl-4-hydroxyphenyl propionate, 1,3,4-trimethyl-2,4,6-tris(3,5-di-tert-butyl-4-hydroxybenzyl)benzene, bis-(4-t-butyl-3-hydroxy-2,6-dimethylbenzyl)dithioterephthalate,1,3,5-tris(4-tert-butyl-3-hydroxy-2,6-dimethylbenzyl)-1,3,5-triazine-2,4,6-(1H, 3H, 5H)-trione, 2,4,6-trioxo-s-triazine-1,3,5-(2H, 4H, 6H)-triethyl tris-[3,-(3,5-di-t-butyl-4-hydroxyphenyl)-propionate], 1,1,3-tris(6-t-butyl-m-cresol)butane, di(n-octadecyl)3,5-di-t-butyl-4-hydroxybenzyl phosphate, and 4,4'-butylidenebis(6-t-butyl-3-methylphenol).

Other useful phenolic antioxidants include 2,6-di-t-butyl-p-cresol, 2-methyl-4,6-di-t-butylphenol, 2,6-di-octadecyl-p-cresol, di-n-octadecyl α-(3,5-di-t-butyl-4-hydroxy-benzyl)malonate, di-n-octadecyl α-(3-t-butyl-4-hydroxy-5-methyl-benzyl)malonate, di-n-octadecyl-α,α'bis-(3-t-butyl-4-hydroxy-5-methylbenzyl)-malonate, 1,4-di(3,5-di-t-butyl-4-hydroxy-benzyl)-2,3,5,6-tetramethylbenzene, 1,3,5-tris(3,5-di-t-butyl-4-hydroxybenzyl)-2,4,6-trimethylbenzene, 1,1,3-tris(3,5-dimethyl-4-hydroxyphenol)-propane, 1,1,3-tris(5-t-butyl-4-hydroxy-2-methylphenyl)butane, 1,1,5,5-tetrakis-(3'-t-butyl-4'-hydroxy-6'-methylphenyl)-n-pentane, octadecyl-(3,5-dimethyl-4-hydroxy-benzylthio)-acetate, dodecyl-(3,5-di-t-butyl-4-hydroxybenzylthio)-propionate, 4,4'-thiobis-(2-t-butyl-5-methylphenol), 4,4'-thiobis-(2-t-butyl-6-methylphenol), 2,2'-thiobis-(6-t-butyl-4-methylphenol), 4,4'-thiobis-(2-methyl-5-t-butylphenol), 2,5-di-t-butylhydroquinone, 2,6-di-t-butylhydroquinone, 2,5-di-t-butyl-4-hydroxyanisole, 2,2'-methylene-bis-(6-t-butyl-4-methylphenol), 2,2'-methylene-bis-(6-t-butyl-4-ethylphenol), 4,4'-butylidene-bis(2,6-di-t-butylphenol), 4,4'-(2-butylidene)-bis(2-t-butyl-5-methylphenol), 2,2'-methylene-bis[6-(2-t-methylcyclohexyl)-4-methylphenol, 2,2'-methylene-bis(3-t-butyl-5-ethylphenol)4,4'-methylene-bis(3,5-di-t-butylphenol), 4,4'-methylene-bis(3-t-butyl-5-methylphenol), 2,2'-methylene-bis-(3-t-butyl)-5-methyl-phenol), 6-(4-hydroxy-3,5-di-t-butylphenoxy)-2,4-bis-(n-octyl-thioethylthio)-1,3,5-triazine, 6-(4-hydroxy-3-methyl-

phenoxy)2,4-bis-(n-octatylthio)-1,3,5-triazine, 6-(4-hydroxy-3-t-butyl-phenoxy)-2,4-bis-(n-octylthio-ethylthio)-1,3,5-triazine, 6-(4-hydroxy-3-methyl-5-t-butylphenoxy)-2,4-bis-(n-octylthio)-1,3,5-triazine, 2,4-bis-(4-hydroxy-3-methyl-5-t-butylphenoxy)-6-(n-octylthio)-1,3,5-triazine, 2,4,6-tris-(4-hydroxy-3-methyl-5-t-butylphenoxy)-1,3,5-triazine, 6-(4-hydroxy-3,-di-t-butylphenoxy)-2,4-bis-(n-octylthiopropylthio)-1,3,5-triazine, 6-(4-hydroxy-3,5-di-t-butylphenoxy)-2,4-bis-(n-dodecylthioethylthio)-1,3,5-triazine, 2,4-bis-(4-hydroxy-3,5-di-t-butylphenoxy)-6-butylthio-1,3,5-triazine, 2,4-bis-(4-hydroxy-3,5-di-t-butylphenoxy)-6-(n-octadecylthio)-1,3,5-triazine, 2,4-bis-(4-hydroxy-3,5-di-t-butylphenoxy)-6-(n-dodecylthio)-1,3,5-triazine, 2,4-bis-(4-hydroxy-3,5-di-t-butylphenoxy)-6-(n-octyl-thiopropylthio)-1,3,5-triazine, 2,4-bis-(4-hydroxy-3,5-di-t-butylphenoxy)-6-n-octyl-thioethylthio)-1,3,5-triazine, 2,4-bis-(4-hydroxy-3,5-di-t-butylphenoxy)-6-(n-dodecylthioethylthio)-1,3,5-triazine, 2-(n-octadecylthio)ethyl 3,5-di-t-butyl-4-hydroxyphenylacetate, 2-(n-octadecylthio)ethyl 3,5-di-t-butyl-4-hydroxybenzoate 2-(2-hydroxyethylthio)ethyl 3,5-di-t-butyl-4-hydroxybenzoate, 2,2'-thiodiethanol bis(3,5-di-t-butyl-4-hydroxyphenyl)acetate, diethyl glycol bis-[3-(3,5-di-t-butyl-4-hydroxyphenyl)propionate], 2-(n-octadecylthio)ethyl 3-(3,5-di-t-butyl-4-hydroxyphenyl)-propionate, 2,2'-thiodiethanol-bis-3-(3,5-di-t-butyl-4-hdyroxyphenyl)propionate, stearamido N,N-bis-[ethylene 3-(3,5-di-t-butyl-4-hydroxyphenyl)propionate], n-butylimino N,N-bis-[ethylene 3-(3,5-di-t-butyl-4-hydroxyphenyl)propionate], 2-(2-stearoyloxyethylthio)-ethyl 3,5-di-t-butyl-4-hydroxybenzoate, 2-(2-hydroxy-ethylthio)ethyl 7-(3-methyl-5-t-butyl-4-hydroxyphenyl)-heptanoate, 2-(2-stearoyloxyethylthio)ethyl 7-(3-methyl-5-t-butyl-4-hydroxyphenyl)heptanoate,

1,2-propylene glycol bis-[3-(3,5-di-t-butyl-4-hydroxyphenyl)propionate], ethylene glycol bis-[3-(3,5-di-t-butyl-4-hydroxyphenol)propionate], neopentylglycol bis[3-(3,5-di-t-butyl-4-hydroxyphenyl(propionate], ethylene glycol bis-(3,5-di-t-butyl-4-hydroxyphenylacetate), glycerine-1-n-octadecanoate-2,3-bis-(3,5-di-t-butyl-4-hydroxyphenylacetate, pentaethylthritol-tetrakis-[3-(3,5-di-t-butyl-4-hydroxyphenyl]propionate, 1,1,1-trimethylol ethane-tris-3-(3,5-di-t-butyl-4-hydroxyphenyl)-propionate, sorbitol hexa-[3-(3,5-di-t-butyl-4-hydroxyphenyl)propionate], 1,2,3-butanetriol tris-[3-(3,5-di-t-butyl-4-hydroxyphenyl)propionate], 2-hydroxyethyl 7-(3-methyl-5-t-butyl-4-hydroxyphenyl)-heptanoate, 2-stearoyloxyethyl 7-(3-methyl-5-t-butyl-4-hydroxyphenyl)heptanoate, 1,6-n-hexanediol-bis[(3',5'-di-t-butyl-4-hydroxyphenyl)propionate], n-octadecyl 3-(3,5-di-t-butyl-4-hydroxyphenyl)-propionate, n-octadecyl 2-(3,5-di-t-butyl-4-hydroxyphenyl)-acetate, n-octadecyl 3,5-di-t-butyl-4-hydroxybenzoate, n-hexyl 3,5-di-t-butyl-4-hydroxyphenylbenzoate, n-dodecyl 3,5-di-t-butyl-4-hydroxyphenylbenzoate, neo-dodecyl 3-(3,5-di-t-butyl-4-hydroxyphenyl)propionate, dodecyl β-(3,5-di-t-butyl-4-hydroxyphenyl)propionate, ethyl α-(4-hydroxy-3,5-di-t-butylphenyl)isobutyrate, octadecyl α-(4-hydroxy-3,5-di-t-butylphenyl)propionate, 2-(n-octylthio)ethyl 3,5-di-t-butyl-4-hydroxybenzoate, 2-(n-octylthio)ethyl 3,5-di-t-butyl-4-hydroxy-phenylacetate, 2,4-bis-(n-octylthio)-6-(3,5-di-t-butyl-4-hydroxy-anilino)-1,3,5-triazine, 6-(4-hydroxy-3-methyl-5-t-butylanilino)-2,4-bis-(n-octylthio)-1,3,5-triazine, 6-(4-hydroxy-3,5-dimethyl-anilino)-2,4-bis-(n-octylthio)-1,3,5-triazine, 6-(4-hydroxy-3,5-di-t-butylanilino)-2,4-bis-(n-octylthio)-1,3,5-triazine, 6-(4-hydroxy-3,5-di-t-butylanilino)-4-(4-hydroxy-3,5-di-t-butyl-phenoxy)-2-(n-octylthio)-1,3,5-triazine, 2,4-bis(4-hydroxy-3,5-di-t-butylanilino)-6-(n-octylthio)-1,3,5-triazine, 2,3-(3,5-di-t-butyl-4-hydroxyphenoxy)-6-(n-octylthio)-1,3,5-triazine, 2,4,6-tris-(4-hydroxy-3,5-di-t-butylphenoxy)-1,3,5-triazine, di-n-octadecyl 3,5-di-t-butyl-4-hydroxybenzylphosphonate, di-n-octadecyl 3-t-butyl-4-hydroxy-5-methylbenzylphosphonate, di-n-octadecyl 1-(3,5-di-t-butyl-4-hydroxyphenyl)ethanephosphonate, di-n-tetradecyl 3,5-di-t-butyl-4-hydroxybenzylphosphonate, di-n-hexadecyl 3,5-di-t-butyl-4-hydroxybenzylphosphonate, di-n-dodecyl-3,5-di-t-butyl-4-hydroxybenzylphosphonate, di-n-octadecyl 3,5-di-t-butyl-4-hydroxybenzylphosphonate and tris-(3-t-butyl-4-hydroxy-5-methylbenzyl)isocyanurate.

The most preferred phenolic anitoxidants are tetrakis [methylene(3,5-di-t-butyl-4-hydroxyhydro cinnamate)]-methane and tris(3,5-di-t-butyl-4-hydroxybenzyl) isocyanurate. These compounds are identified as I and II respectively in subsequent discussion and the poly TDP is identified as III.

The amounts of phenolic antioxidant and poly TDP blended with the polyolefin can be varied independently from a very small stabilizing amount up to several percent. More specifically, beneficial results are obtained when the ratio by weight of I or II to III is in the range of 1 to 10 to 2 to 1, preferably from 1 to 5 to 1 to 1, and the total stabilizer combination is from 0.1 percent to 10.0 percent by weight of the total weight of the polyolefin composition filled with talc, with the preferable concentration being from 0.2 percent tc 3.0 percent of the formulation weight. If the stabilizer is used in an amount of less than 0.1 percent, the polyolefin composition does not possess the longer term stability preferred for many commerical

applications. If the stabilizer is used in amounts greater than 5 to 10 percent by weight, insignificant stability is achieved by the excess stabilizer.

Phenolic antioxidants, including tetrakis-[methylene(3,5-di-t-butyl-4-hydroxyhydrocinnamate)]-methane, stabilize homopolymers and copolymers of ethylene and propylene against the adverse effects of heat and oxidation. However, these stabilizers and prior combinations thereof with other types of stabilizers, such as sulfur containing compounds and organo-phosphorous compounds, have proved to have limitations when used in polyolefin compositions filled with talc.

This invention will be further illustrated by the following tabular examples although it will be understood that these examples are included merely for purposes of illustration and are not intended to limit the scope of the invention.

The compositions of the following table were prepared by intimately blending in a mixer the heat-softened polypropylene, e.g., of 0.90 specific gravity, and the various comminuted stabilizer components in the concentrations shown, granulating the blend and injection molding the same into 2-1/2" x 1/2" x 1/16" test specimens. The test specimens were then placed in a forced air oven at 150°C. and the times required for degradation, as monitored by surface appearance, thereof recorded. Table 1 gives the results.

TABLE 1

Oven Stability at 150°C. of Tenite 423S Polypropylene (S.g. = 0.90)

Percent Additive Based on Total Weight of Formulation

| Formulation No. | Talc[6] | II | I | Plastanox[1] LTDP | Plastanox[2] 711 | Plastanox[3] 1212 | Plastanox[4] STDP | III Poly TDP[5] 2000 | Oven Life 150°C. (Hrs.) |
|---|---|---|---|---|---|---|---|---|---|
| 1 | | .1 | | .3 | | | | | 1400 |
| 2 | | .1 | | | | | | .3 | 2500 |
| 3 | | | .1 | .3 | | | | | 1700 |
| 4 | | | .1 | | | | | .3 | 2800 |
| 5 | 40 | .2 | | .5 | | | | | 165 |
| 6 | 40 | .2 | | | .5 | | | | 180 |
| 7 | 40 | .2 | | | | .5 | | | 160 |
| 8 | 40 | .2 | | | | | .5 | | 165 |
| 9 | 40 | .2 | | | | | | .5 | 2000 |
| 10 | 40 | | .2 | | | | | .3 | 1800 |

1. Dilauryl-3,3'-thiodipropionate
2. Di-tridecyl-3,3'-thiodipropionate
3. Mixed lauryl-stearyl-3,3'-thiodipropionates
4. Distearyl-3,3'-thiodipropionate
5. Polyester from dimethyl-3,3'-thiodipropionate, 1,4-cyclohexanedimethanol, capped with stearyl alcohol, and having an average molecular weight of about 2000.
6. Talcron CP 38-33 (Pfizer Inc.)

The addition of talc to polypropylene greatly reduces its ovenlife. The addition of other stabilizers identified as Plastanox LTDP, 711, 1212 and STDP to formulations stabilized with stabilizers I or II alone does little to increase the ovenlife of these formulations. However, the addition of Poly TDP (2000 average molecular weight) with either I or II greatly increases the oven stability. This is a highly unexpected result.

The stabilized polyolefin compositions can be molded into articles which are unexpectedly stable to oxidative degradation. Such articles include plates, bowls, toys, garbage cans, appliances such as vacuum cleaners, dishwashers, clothes dryers and hairdryers, underhood automotive applications, and coatings for various uses such as electrical wire coatings. Other additives, stabilizers, copper deactivators, pigments, dyes and the like can also be added to the present stabilized compositions.

Claims:

1. Polyolefin compositions containing 5 to 50% by weight talc and a phenolic antioxidant and characterized by improved resistance to oxidative degradation provided by (III) poly TDP which is a polyester having the repeating unit

$$-O-\overset{O}{\overset{\|}{C}}-(CH_2)_2-S-(CH_2)_2-\overset{O}{\overset{\|}{C}}-O-R-$$

wherein R is selected from the group of divalent radicals consisting of 1,1-cyclohexanedimethylene; 1,2-cyclohexanedimethylene; 1,3-cyclohexanedimethylene; and 1,4-cyclohexanedimethylene; said polyester being at least partially chain-terminated with an alcohol selected from methanol, ethanol, butanol, isobutanol, 2-ethylhexanol, 2,2-dimethylpentanol, 2,2,4-trimethylpentanol, and stearyl alcohol, or an acid or anhydride selected from acetic, butyric, isobutyric, lauric, oleic, stearic, pelargonic and benzoic, and said polyester having an average molecular weight of from about 500 to about 4000.

2. Polyolefin compositions according to Claim 1 wherein the polyolefin is polypropylene.

3. Polyolefin compositions according to Claim 2 wherein the phenolic antioxidant is (I) tetrakis-[methylene-(3,5-di-t-butyl-4-hydroxyhydrocinnamate)] methane.

4. Polyolefin compositions according to Claim 2 wherein the phenolic antioxidant is (II) tris(3,5-di-t-butyl-4-hydroxybenzyl) isocyanurate.

5. Polyolefin compositions according to Claims 3 and 4 wherein the poly TDP is a polyester of dimethyl-3,3'-thiodipropionate and 1,4-cyclohexane dimethanol, capped with stearyl alcohol, and having an average molecular weight of 1500 to 2500.

6. Polyolefin compositions according to Claim 5 wherein the total stabilizer concentration is from 0.1 to 10% by weight.

7. Polyolefin compositions according to Claim 6 wherein the total stabilizer concentration is from 0.2 to 3% by weight and the weight ratio of (I) or (II) to (III) is from 1:10 to 1:1.

0018015

Europäisches Patentamt

# EUROPÄISCHER RECHERCHENBERICHT

Nummer der Anmeldung

EP 80102157.7

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A1 - 2 804 980 (IMPERIAL CHEMICAL)<br>+ Claims +<br>-- | 1-7 | C 08 L 23/12<br>C 08 L 67/02<br>C 08 K 3/34<br>C 08 K 5/36 |
| | DE - A1 - 2 517 800 (DART IND.)<br>+ Claim 1; page 6, paragraphs 2,3 +<br>---- | 1,2,5 | |
| | | | RECHERCHIERTE SACHGEBIETE (Int. Cl. 3) |
| | | | C 08 L<br>C 08 K |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 30-06-1980 | DICHER |

EPA form 1503.1 06.78